# EUROPEAN PATENT SPECIFICATION

(11) **EP 2 160 660 B1**
(45) Date of publication and mention of the grant of the patent: **26.01.2011**
(21) Application number: 08774676.4
(22) Date of filing: 03.07.2008
(51) Int. Cl.: G04B 39/00, F16J 1/16

(54) **A COMPRESSOR**
VERDICHTER
COMPRESSEUR

(30) Priority: 04.07.2007 TR 200704683
(43) Date of publication of application: 10.03.2010
(73) Proprietor: Arçelik Anonim Sirketi, 34950 Istanbul (TR)
(72) Inventor: KERPICCI, Husnu, Tuzla, 34950 Istanbul (TR); KURTULUS, Tolga, Tuzla, 34950 Istanbul (TR)
(86) International application number: PCT/EP2008/058548
(87) International publication number: WO 2009/004046

(56) References cited:
- WO-A-2005/098236
- DE-A1- 3 217 341
- JP-A- 11 325 075
- US-A- 4 889 039
- US-A- 5 255 592
- US-A- 5 499 571
- US-A- 5 542 341

## Description

The present invention relates to a reciprocating hermetic compressor wherein mechanical loss due to friction on moving parts is reduced.

Compression process in reciprocating hermetic compressors used in coolers is realized through the action of a piston, and the action of the piston is obtained by a crank-connecting rod mechanism. The piston is joined to the connecting rod on the crank-connecting rod mechanism by means of a wrist pin. During one full rotation of the crankshaft, piston forces affecting the connecting rod-small eye may vary depending on the angle of the crank. As space is small inside the piston, in particular in the connecting rod-small eye area wherein there are also a considerable number of coercive charges, proper provisioning of hydrodynamic lubrication is not provided as required. During suction period or compression period of a compressor, the lubricant film over the angles of the crank, whereupon charges reach a maximum level, gets thinner or disappears, and because the connecting rod-small eye is not adequately lubricated, corrosive wear accrues due to dry friction caused by metal-to-metal contact. Corrosion of the small eye increases mechanical loss and shortens the lifetime of the compressor.

The Patent Application No US5255592 which discloses a compressor according to the preamble of claim 1, describes a reciprocating hermetic compressor in which the wrist pin maintaining the piston-connecting rod connection is manufactured from an aluminum alloy, and in order to avoid wearing, the said wrist pin is coated with electrolysis.

The aim of the present invention is the realization of a compressor wherein mechanical loss from friction over the wrist pin and the small eye, both located inside the piston, are attenuated through a simple and low-cost mechanism.

In the compressor realized in order to attain the aim of the present invention, explicated in the first claim and the respective claims thereof, the conduction of cooling fluid to the cooling system is achieved by means of a mechanism comprising an electric motor, a crankshaft, a connecting rod, and a piston, the said piston being inside a cylinder and activated by the said connecting rod, and the said connecting rod is joined to the piston by means of a wrist pin.

In the embodiment that constitutes the object of the invention, the exterior surface of the wrist pin and the radial-sliding small eye enclosing the wrist pin on the crank arm are both provided with magnets arranged oppositely so that equal poles face one another, and the said magnets exert a magnetic force in the opposite direction to the charges coercing in the direction of the motion axis of the piston, reducing the impact of friction between the wrist pin and the small eye, thus preserving the lubricant film and avoiding corrosion.

In the embodiment that constitutes the object of the invention, magnets are arranged over the wrist pin and the small eye in the direction of the motion axis of the piston at the closest and the farthest points in regards to the shaft, there where the wrist pin presses the most against the small eye.

In one embodiment of the invention, the wrist pin comprises a lubrication canal, and magnets are provided over the wrist pin in such a way that the said magnets stay side by side and at intervals so as to form a hole in between at an even level as the lubricating canal.

In another embodiment of the invention, magnets are provided onto the wrist pin housings in the piston, wherein wrist pins are inserted by the two extremities, and onto the wrist pin fragments inserted inside the said housings in such a way that equal poles face one another.

In the compressor which constitutes the object of the invention, the small eye can be employed under required hydrodynamic lubricating conditions through the creation of a magnetic force that results from the repulsion act of the magnets, which reduces the impact of friction between the wrist pin and the small eye and preserves the lubricant film.

The compressor realized in order to attain the aim of the present invention is illustrated in the attached figures, where:

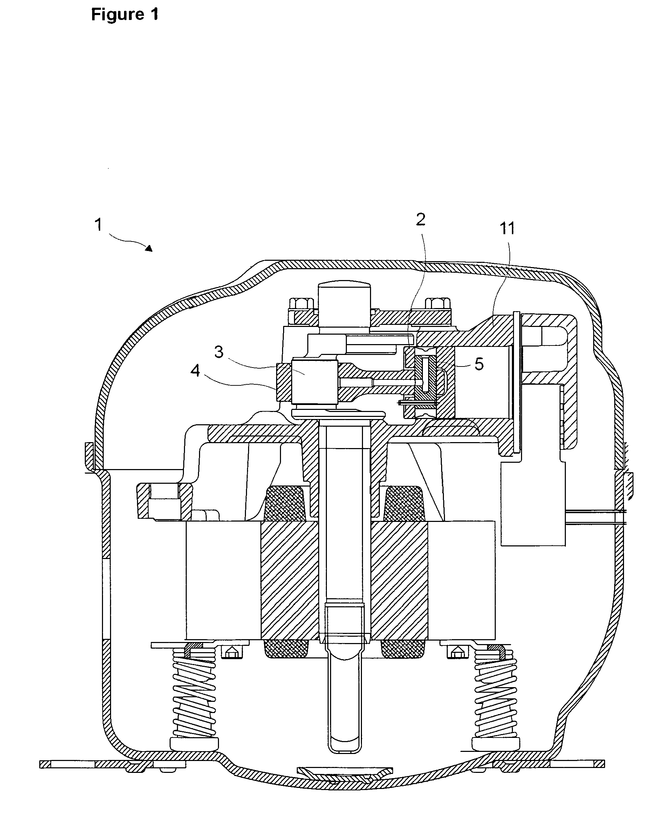

Figure 1 - is the schematic view of a compressor.

Figure 2 - is the burst open view of a piston, a wrist pin and a connecting rod.

Figure 3 - is the schematic view of a piston, a wrist pin and a connecting rod in assembled form.

Figure 4 - is the detailed view of A in Figure 3.

Figure 5 - is the schematic view of a piston, a wrist pin and a connecting rod in one embodiment of the invention.

Figure 6 - is the schematic view of a piston, a wrist pin and a connecting rod in another embodiment of the invention.

The elements illustrated in the figures are numbered as follows:
1. Compressor
2. Piston
3. Crankshaft
4. Connecting rod
5. Wrist pin
6. Big eye
7. Small eye
8. Shaft
9. Wrist pin housing
10. Magnet
11. Cylinder
12. Lubrication canal

The compressor (1) comprises a cylinder (11) wherein the cooling fluid is compressed, a piston (2) which moves inside the bore of the cylinder (11), a crankshaft (3) which transfers the movement of the electric motor, a connecting rod (4) which converts the circular motion of the crankshaft (3) into linear motion and transfers to the piston (2), and a wrist pin (5) which joins the piston (2) and the connecting rod (4) and which is fixed onto the piston (2) transversely in regards to the motion axis (E) of the piston (2).

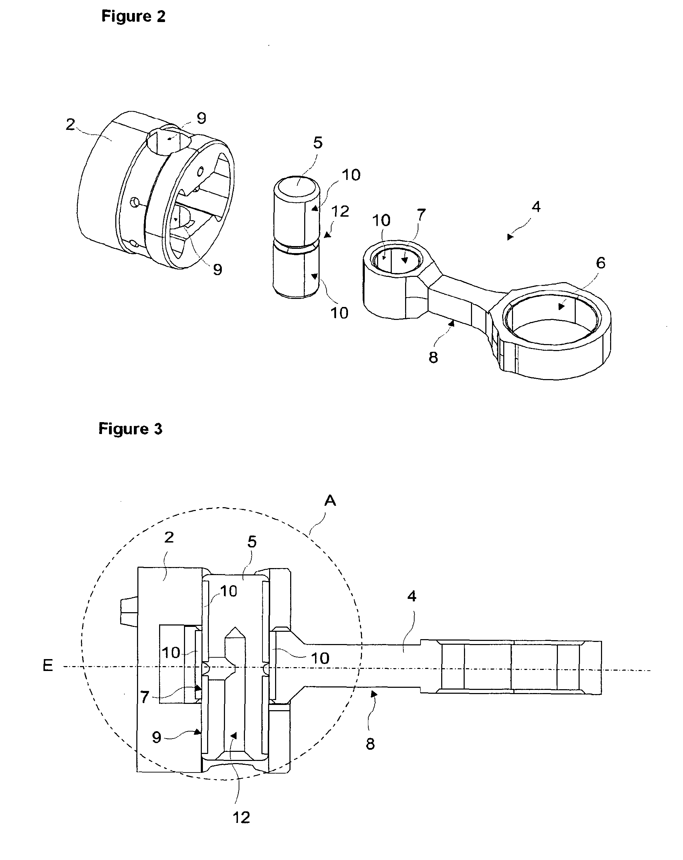

Over the connecting rod (4), the compressor (1) also comprises a big eye (6) onto which the crankshaft (3) is attached, a radial-sliding small eye (7) which encloses the wrist pin (5) in motion, and a shaft (8) which lies between the big eye (6) and the small eye (7) (Figure 2).

The connecting rod (4) while activating the piston (2) inside the cylinder (11) by means of a wrist-pin (5) performs at the same time a slight swinging motion which in turn causes the small eye (7) to make a small-angled radial sliding over the exterior surface of the wrist pin (5). The wrist pin (5) moves together with the piston (2) and does not rotate around its own axis inside the piston (2), in other words, does not make any movement dependent on the piston (2).

The compressor which constitutes the object of the present invention comprises several magnets (10), arranged oppositely on the exterior surface of the wrist pin (5) and on the small eye (7) in such a way that equal poles face one another, creating a magnetic counter force against the charges exerting pressure in the same direction as the motion axis (E) of the piston (2), reducing thus the friction force between the wrist pin (5) and the small eye (7) (Figures 2-6).

Repulsive magnetic force, which is created by the magnets (10) provided on the surfaces where the wrist pin (5) exerts pressure over the small eye (7) and arranged in such a way that equal forces face one another, attenuates friction between the wrist pin (5) and the small eye (7), and maintains the preservation of the lubricant film between the wrist pin (5) and the small eye (7).

The wrist pin (5) exerts more pressure over the fragment of the small eye (7) nearest to the shaft (8) during a forward motion of the piston (2) and exerts more pressure over the fragment of the small eye (7) away from the shaft (8) during a backward motion. Consequently, magnets (10) are arranged over the wrist pin (5) and over the small eye (7) in the same direction as the motion axis (E) of the piston (2) on the points nearest to the shaft (8) and away from the shaft (8); and the repulsive force of each pair of magnets (10) over these points attenuates the pressure of the wrist pin (5) on the small eye (7) (Figure 2-6).

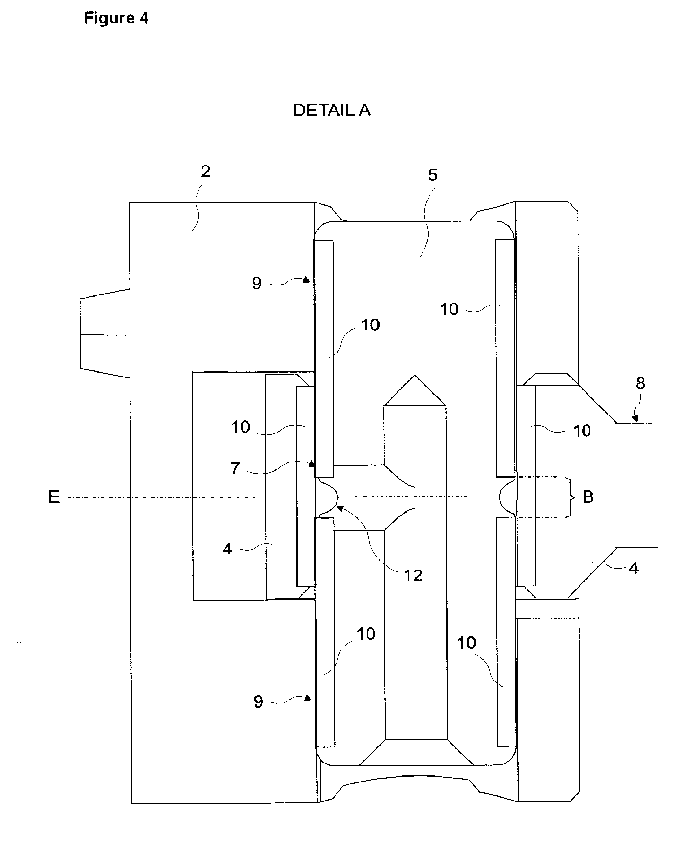

In one embodiment of the invention, the compressor (1) comprises a lubrication canal (12) which, passing through the wrist pin (5), opens to the side surface thereon, encircles the wrist pin (5) and serves to convey the lubricant to the small eye (7) (Figure 3, 4). In this embodiment, magnets (10) are arranged over the wrist pin (5) side by side and at intervals in such a way that a hole (B) is formed in between at an even level as the lubrication canal (12) (Figure 4). Therefore, the magnets (10) placed over the wrist pin (5) do not cover the top of the lubrication canal (12) and the lubricant can pass through the said hole (B) between the magnets (10) to ensure the lubrication of the small eye (7).

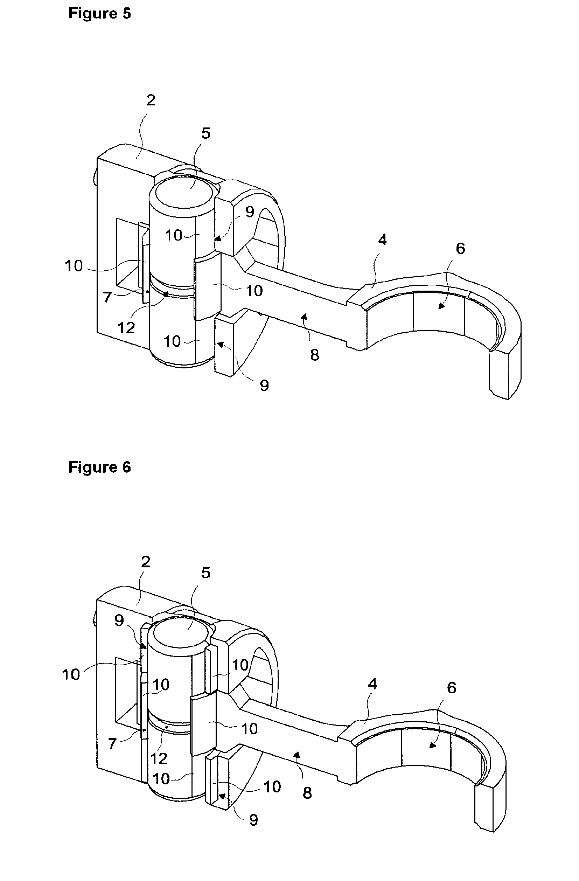

In another embodiment of the invention, the compressor (1) comprises two wrist pin housings (9) in the piston (2), wherein the two extremities of the wrist pin (5) are inserted, and magnets (10) are provided over the wrist pin housings (9) and over the fragments of the wrist pins (5) inserted inside the wrist pin housings (9), arranged in such a way that equal poles face one another (Figure 6).

In this embodiment, charges, which exert pressure over the small eye (7) on the connecting rod (4) and over the central area of the wrist pin (5) and which cause wearing in this area, are dispersed towards the two extremities of the wrist pin (5); wearing is therefore minimized by preventing the wrist pin (5) from pressing onto the interior surface of the small eye (7) on the connecting rod (4) as well as onto the interior surface of the wrist pin housing (9) in the piston (2).

In the compressor (1) which constitutes the object of the invention, the lubricant film between the wrist pin (5) and the small eye (7) does not thin; when charges increase and the wrist pin (5) starts exerting pressure so as to exceed the lubricant film inside the small eye (7), the magnetic force created by the magnets (10) repulsing one another ensures the preservation of the lubricant film, and the small eye can run under the required conditions of hydrodynamic lubrication. Excessive forces affecting the small eye (7) are counterbalanced by magnets (10), and this reduces mechanical loss and wearing, lengthens the lifetime of the compressor (1), and improves the operating performance of the compressor (1) (C.O.P).

## Claims

1. A compressor (1) for providing the conveyance of a cooling fluid to a cooling system comprising: a cylinder (11), a piston (2) which moves inside the bore of the cylinder (11), a crankshaft (3) which transmits the movement of a electric motor, a connecting rod (4) which converts the circular motion of the crankshaft (3) into linear motion and transfers it to the piston (2), and a wrist pin (5) which joins the piston (2) and the connecting rod (4), wherein the connecting rod (4) is provided with a radial-sliding small eye (7) which encloses the wrist pin (5) in motion a big eye (6) wherein the crankshaft (3) is inserted, and a shaft (8) that lies between the big eye (6) and the small eye (7), the compressor being **characterized by** a number of magnets (10) which are arranged oppositely over the exterior surface of the wrist pin (5) and over the small eye (7), in such a way that equal poles face one another, and which reduce friction force between the wrist pin (5) and the small eye (7) by exerting a magnetic force in the opposite direction to the charges pressing in the motion axis (E) of the piston (2), and whereby the magnets (10) are provided over the wrist pin (5) and the small eye (7) on the points nearest to the shaft (8) and farthest away from the shaft (8) and are arranged in the direction of the motion axis (E) of the piston (2).

2. A compressor (1) as defined in Claim 1, **characterized by** a lubrication canal (12) which passes through the wrist pin (5) and opens to the side surface thereon, which encircles the wrist pin (5), and which serves for conveying the lubricant to the small eye (7), and magnets (10) arranged over the wrist pin (5) side by side and at intervals in such a way that a hole (B) is formed in between at an even level as the lubrication canal (12).

3. A compressor (1) as defined in any one of the above claims, **characterized by** two wrist pin housings (9) in the piston (2) wherein the two extremities of the wrist pin (5) are inserted, and magnets (10) provided over these wrist pin housings (9) as well as over the fragments of the wrist pins (5) inserted inside the said wrist pin housings (9), arranged in such a way that equal poles face one another.

## Patentansprüche

1. Kompressor (1) zum Bereitstellen der Förderung eines Kühlfluids an ein Kühlsystem, umfassend einen Zylinder (11), einen Kolben (2), der sich in der Bohrung des Zylinders (11) bewegt, eine Kurbelwelle (3), die die Bewegung eines Elektromotors überträgt, eine Verbindungsstange (4), die die Kreisbewegung der Kurbelwelle (3) in eine Linearbewegung umwandelt und auf den Kolben (2) überträgt, und einen Kolbenbolzen (5), der den Kolben (2) und die Verbindungsstange (4) verbindet, und wobei die Verbindungsstange (4) mit einer kleine Radialgleitöse (7) versehen ist, die den Kolbenbolzen (5) bei seiner Bewegung umgibt, einer großen Öse, in die die urbelwelle (3) eingeführt ist, und einer Welle (8), die zwischen der großen Öse und der kleinen Öse (7) angeordnet ist; wobei der Kompressor **gekennzeichnet ist, durch** eine Anzahl von Magneten (10), die gegenüber der Außenfläche des Kolbenbolzens (5) und oberhalb der kleinen Öse (7) angeordnet sind, derart, dass gleiche Pole einander zugewandt sind, und die die Reibungskraft zwischen dem Kolbenbolzen (5) und der kleinen Öse (7) reduzieren, indem sie eine Magnetkraft in entgegengesetzter Richtung zu den Ladungen ausüben, die an der Bewegungsachse (E) des Kolbens (2) wirksam sind, und wobei die Magnete (10) über dem Kolbenbolzen (5) und der kleinen Öse (7) an denjenigen Stellen angeordnet sind, die der Welle (8) am nächsten und von der Welle (8) am weitesten entfernt sind, und in Richtung der Bewegungsachse (E) des Kolbens (2) angeordnet sind.

2. Kompressor (1) nach Anspruch 1, **gekennzeichnet durch** einen Schmiermittelkanal (12), der **durch** den Kolbenbolzen (5) verläuft und sich zu dessen Seitenfläche hin öffnet, und der um den Kolbenbolzen (5) herum verläuft und dazu dient, das Schmiermittel zu der kleinen Öse (7) zu befördern, wobei Magnete (10) Seite an Seite und in Intervallen über dem Kolbenbolzen (5) angeordnet sind, derart, dass dazwischen eine Öffnung (B) gebildet wird, die auf der gleichen Ebene wie der Schmiermittelkanal (12) liegt.

3. Kompressor (1) nach einem der vorangehenden Ansprüche, **gekennzeichnet durch** zwei Kolbenbolzengehäuse (9) im Kolben (2), in die die zwei Extremitäten des Kolbenbolzens (5) eingeführt sind, und wobei Magnete (10) über den Kolbenbolzengehäusen (9) sowie über den Teilen der Kolbenbolzen (5), die in die Kolbenbolzengehäuse (9) eingeführt sind, derart angeordnet sind, dass gleiche Pole einander zu gewandt sind.

## Revendications

1. Un compresseur (1) pour fournir le transfert d'un fluide réfrigérant à un système de refroidissement, comprenant un cylindre (11), un piston (2) qui se déplace à l'intérieur de l'alésage du cylindre (11), un vilebrequin (3) qui transmet le mouvement d'un moteur électrique, une bielle (4) qui convertit le mouvement circulaire du vilebrequin (3) en mouvement linéaire et le transfère au piston (2), et un axe de piston (5) qui relie le piston (2) et la bielle (4), et où la bielle (4) est munie d'un petit oeil à glissement radial (7) qui entoure l'axe de piston (5) en mouvement, un grand oeil dans lequel le vilebrequin (3) est inséré, et un axe (8) qui se trouve entre le grand oeil et le petit oeil (7) ; le compresseur étant **caractérisé par** un certain nombre d'aimants (10) qui sont disposés de façon opposée sur la surface extérieure de l'axe de piston (5) et sur le petit oeil (7), de telle sorte que les pôles égaux soient face à face, et qui réduisent la force de frottement entre l'axe de piston (5) et le petit oeil (7) en exerçant une force magnétique dans la direction opposée aux charges appuyant dans l'axe de mouvement (E) du piston (2), et où les aimants (10) sont placés sur l'axe de piston (5) et le petit oeil (7) sur les points les plus proche à l'axe (8) et les plus loin de l'axe (8) et sont disposés dans le sens de l'axe de mouvement (E) du piston (2).

2. Un compresseur (1) selon la Revendication 1, **caractérisé par** un canal de lubrification (12) qui passe à travers de l'axe de piston (5) et qui s'ouvre à la surface latérale là-dessus, qui entoure l'axe de piston (5), et qui sert pour le transfert du lubrifiant au petit oeil (7), et les aimants (10) disposés sur l'axe de piston (5) côte à côte et à des intervalles de telle sorte que un trou (B) sois formé entre les deux à même niveau que le canal de lubrification (12).

3. Un compresseur (1) selon l'une quelconque des revendications précédentes, **caractérisé par** deux boîtiers de l'axe de piston (9) dans le piston (2) dans lesquels les deux extrémités de l'axe de piston (5) sont insérées, et les aimants (10) placés sur ces boîtiers de l'axe de piston (9) ainsi que sur les fragments de l'axes de piston (5) insérés dans lesdits boîtiers de l'axe de piston (9), disposés de telle manière que les pôles égaux soient face à face.
